# EUROPEAN PATENT SPECIFICATION

(11) **EP 2 698 801 B1**
(45) Date of publication and mention of the grant of the patent: **17.02.2021**
(21) Application number: 12771721.3
(22) Date of filing: 13.04.2012
(51) Int. Cl.: H01F 38/14, H01F 3/00, B60M 7/00, H01F 3/04, B60L 53/12, B60L 53/30

(54) **FERRITE CORE STRUCTURE FOR A POWER SUPPLY DEVICE OF AN ELECTRIC VEHICLE AND POWER SUPPLY ROAD STRUCTURE USING SAME**
FERRITKERNAUFBAU FÜR EINE STROMVERSORGUNGSVORRICHTUNG EINES ELEKTROFAHRZEUGS UND STROMLIEFERNDE STRASSENKONSTRUKTION DAMIT
STRUCTURE DE NOYAU EN FERRITE POUR DISPOSITIF D'ALIMENTATION EN ÉNERGIE D'UN VÉHICULE ÉLECTRIQUE, ET STRUCTURE DE ROUTE D'ALIMENTATION EN ÉNERGIE QUI UTILISE CETTE STRUCTURE DE NOYAU

(30) Priority: 13.04.2011 KR 20110034168
(43) Date of publication of application: 19.02.2014
(73) Proprietor: Korea Advanced Institute of Science and Technology, Daejeon 34141 (KR)
(72) Inventor: CHO, Dong Ho, Seoul 137-072 (KR); KONG, Byung O, Busan 616-120 (KR); SHIN, Young Moo, Daejeon 305-762 (KR); SONG, Bo Yune, Seoul 156-070 (KR); SON, Sung Jun, Jeonju-si Jeonrabuk-do 561-826 (KR); SHIN, Jae Gue, Daejeon 305-807 (KR)
(74) Representative: Michalski Hüttermann & Partner Patentanwälte mbB
(86) International application number: PCT/KR2012/002789
(87) International publication number: WO 2012/141512

(56) References cited:
- WO-A2-2010/098547
- WO-A2-2010/117139
- JP-A- 2000 116 035
- JP-A- 2000 116 035
- JP-A- 2004 363 137
- JP-A- 2008 120 239

## Description

### Technical Field

The present invention relates to a ferrite core structure for a power supply device of an electric vehicle and a power supply road structure using the ferrite core structure, and more particularly, to a ferrite core structure for a power supply device of an electric vehicle and a power supply road structure using the ferrite core structure that may change a structure of the ferrite core structure to prevent a formation of cracks on a surface of an intermediate portion of the power supply road, and reduce strength degradation caused by a deflection in a traveling direction of the vehicle by disposing steel bars in the traveling direction of the vehicle of the power supply road.

### Background Art

An online electric vehicle refers to a vehicle to be charged during driving and stopping by receiving electricity in a contactless manner through an induction magnetic field from a power supply line implanted in a road. A principle of a transistor that receives, as electric energy, a force of a magnetic field occurring in a power supply device (hereinafter, referred to as a "power supply rail") implanted in a road may be applied to a power collection device of such a contactless magnetic induction charging type electric vehicle.

WO 2010/117139 A2 refers to an ultra slim power supply device for supplying power to an electric vehicle in a contactless manner includes at least one power supply track buried in a road. Each power supply track includes a plate-shaped magnetic core extending along the road, a plate or strip shaped magnetic field generator arranged above the magnetic core through which an alternating current is supplied to generate a magnetic field, a plate or strip shaped insulating body positioned between the magnetic core and the magnetic field generator to isolate them from each other, and a housing for enclosing the magnetic core, the magnetic field generator and the insulating body.

WO 2010/098547 A2 refers to a power supply device and a power acquisition device for an electromagnetic induction-powered electric vehicle that increase a power transfer efficiency by maximizing a lateral deviation tolerance and by minimizing a gap between the power acquisition device and the power supply device while preventing the power acquisition device from colliding with an obstacle present on a road and being damaged by the collision.

JP 2000 11 6035 A2 refers to a ransportation facility, wherein a power supply section is provided for a track having a feeder cable for a mobile equipped with a battery and a fixed side magnetic core is disposed in the power supply section. The mobile is provided with a movable side magnetic core and a secondary winding, wherein the moving length L1 of the movable side magnetic core is set longer than the length L2 of the fixed side magnetic core. The fixed side magnetic core and the movable side magnetic core face each other and a current induced in the secondary winding by conducting the feeder cable is used for charging the battery.

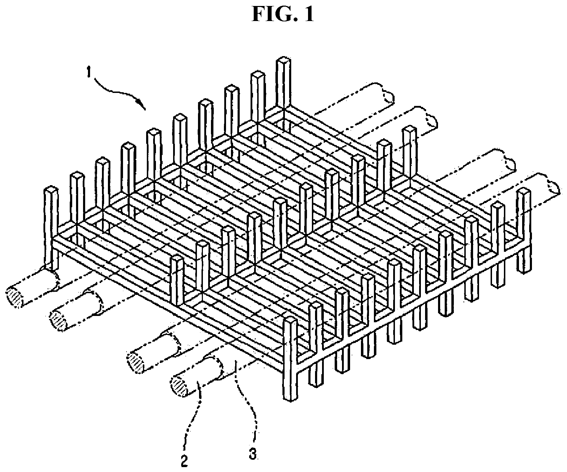

FIG. 1 illustrates a typical power supply rail generating a magnetic field for charging a contactless magnetic induction charging type electric vehicle. The power supply rail may supply electric energy, and include a power supply line 2 of which an outer surface is covered with an insulating duct 3, and a ferrite core module 1 installed under the power supply line 2 to prevent a flux leakage. Here, the ferrite core module 1 may correspond to a structure that may block a flux leakage into left, right, and lower portions to concentrate a magnetic flux in a direction of an upper portion.

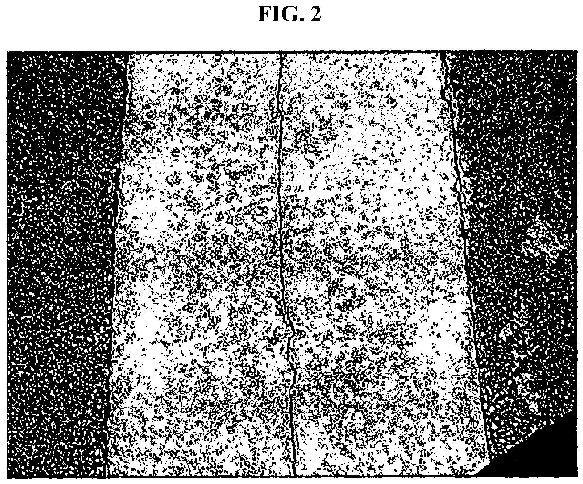

FIG. 2 is a photograph illustrating a formation of cracks in a central portion of a conventional power supply road. A conventional ferrite core module may include vertical core portions (not shown) aligned in a central portion at predetermined intervals in a traveling direction of a vehicle. When vehicles pass, a deflection load may be applied to both side surfaces of the vertical core portions such that cracks may be formed on a surface of an intermediate portion of a power supply road, as shown in FIG. 2.

In addition, a load may be applied repeatedly to the road by passing vehicles such that cracks may be formed in the conventional power supply road structure due to a deflection in a longitudinal direction (a traveling direction of the vehicle).

Accordingly, there is a demand for a method of changing a structure of a ferrite core module to prevent a formation of cracks on a surface of an intermediate portion of a power supply road, thereby increasing an output, when compared to a conventional ferrite core module.

In addition, there is a demand for a method of preventing a formation of cracks on a road, by reducing strength degradation caused by a deflection in a traveling direction of a vehicle due to a load applied repeatedly to the road by passing vehicles.

### Disclosure of Invention

### Technical Goals

The present invention was invented on the basis of the necessity described above, and an aspect of the present invention provides a ferrite core structure for a power supply device of an electric vehicle that may change a structure of a ferrite core module to prevent a formation of cracks on a surface of an intermediate portion of a power supply road, thereby increasing an output, when compared to a conventional ferrite core module.

Another aspect of the present invention provides a road structure using a ferrite core structure for a power supply device of an electric vehicle that may reduce strength degradation caused by a deflection in a traveling direction of a vehicle due to a load applied repeatedly to the road by passing vehicles, thereby preventing a formation of cracks on the road.

### Technical solutions

According to an aspect of the present invention, there is provided a power supply road comprising ferrite core structure for a power supply device of an electric vehicle, the ferrite core structure including a plurality of horizontal core portions arranged to be spaced apart from each other to prevent a flux leakage into the ground, a plurality of first vertical core portions formed to extend from both end portions of the horizontal core portions in a direction of an upper side of the horizontal core portions to prevent the flux leakage into an outer side surface, at least two columns of second vertical core portions formed to extend from a central portion of the horizontal core portions in a direction of the upper side of the horizontal core portions and arranged to be parallel to the first vertical core portions, and a first supporting portion to connect the plurality of first vertical core portions to each other to support the first vertical core portions, wherein the second vertical core portions disperse a deflection load applied to both side surfaces of the second vertical core portions to prevent a formation of cracks on a surface of an intermediate portion of a power supply road, and the power supply road further comprising:
at least one steel bar implanted under the ferrite core structure in a longitudinal direction of the power supply road which coincides with a traveling direction of a vehicle on said power supply road and spaced apart from the ferrite core structure.

The horizontal core portions, the first vertical core portions, and the second vertical core portions may include a ferrite material.

The at least two columns of the second vertical core portions may be disposed to be spaced apart from each other.

The ferrite core structure may further include a second supporting portion to connect the plurality of horizontal core portions to each other to support the horizontal core portions.

According to another aspect of the present invention, there is also provided a power supply road including the ferrite core structure for the power supply device of the electric vehicle, and at least one steel bar implanted under the ferrite core structure to be spaced apart from the ferrite core structure.

The at least one steel bar may be implanted in a longitudinal direction of the power supply road (a traveling direction of the vehicle).

A diameter of the at least one steel bar may be greater than or equal to 19 millimeters (mm).

### Advantageous Effects

According to an embodiment of the present invention, it is possible to prevent a formation of cracks on a surface of an intermediate portion of a power supply road by changing a structure of the ferrite core module, whereby an output may increase, when compared to a conventional ferrite core module.

According to an embodiment of the present invention, it is possible to prevent a formation of cracks on a road, by reducing strength degradation caused by a deflection in a traveling direction of a vehicle due to a load applied repeatedly to the road when vehicles pass.

### Brief Description of Drawings

FIG. 1 is a perspective view illustrating a typical power supply rail generating a magnetic field for charging a conventional contactless magnetic induction charging type electric vehicle.
FIG. 2 is a photograph illustrating a formation of cracks in a central portion of a conventional power supply road.
FIG. 3 is a perspective view illustrating a ferrite core structure for a power supply device of an electric vehicle according to an embodiment of the present invention.
FIG. 4 is a cross-sectional view illustrating a ferrite core structure 100 for a power supply device of an electric vehicle according to an embodiment of the present invention.
FIG. 5 is a perspective view illustrating steel bars and a ferrite core structure for a power supply device of an electric vehicle to be implanted in the ground according to an embodiment of the present invention.
FIG. 6 is a cross-sectional view illustrating a power supply road structure in which steel bars and a ferrite core structure are implanted according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. When it is determined that a detailed description is related to a related known function or configuration which may make the purpose of the present disclosure unnecessarily ambiguous in the description, such a detailed description will be omitted.

### <Core structure>

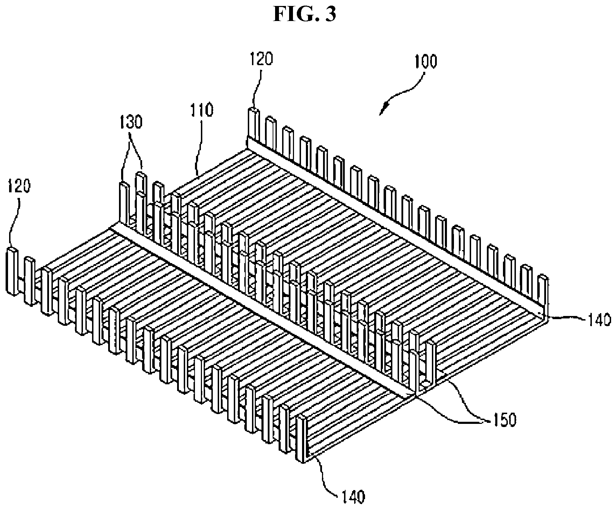

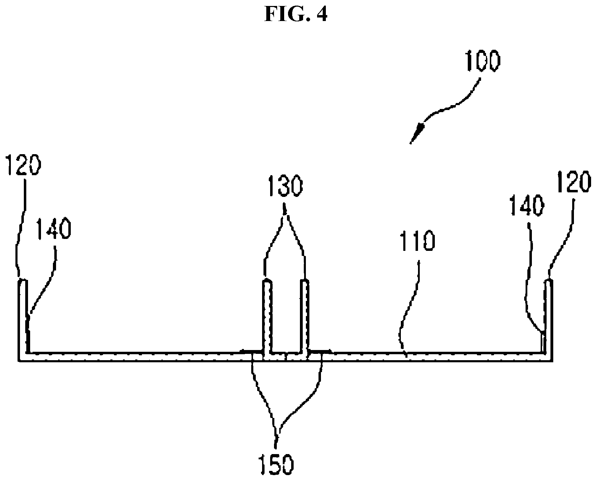

FIG. 3 is a perspective view illustrating a ferrite core structure for a power supply device of an electric vehicle according to an embodiment of the present invention, and FIG. 4 is a cross-sectional view illustrating a ferrite core structure for a power supply device of an electric vehicle according to an embodiment of the present invention. Referring to FIGS. 3 and 4, a ferrite core structure 100 for a power supply device of an electric vehicle (hereinafter, referred to as the "core structure") may include horizontal core portions 110, first vertical core portions 120, second vertical core portions 130, and first supporting portions 140.

The plurality of horizontal core portions 110 may be arranged to be spaced apart from each other to prevent a flux leakage into the ground. Here, a space between the horizontal core portions 110 may be sufficiently smaller than an air space indicating a distance between a surface of a power supply road and a power collection module of a vehicle. When the space between the horizontal core portions 110 is sufficiently smaller than the air space, a magnetic field may be narrowly attenuated and thus, an effect similar to arranging the horizontal core portions 110 successively may be achieved.

The first vertical core portions 120 may be formed to extend from both end portions of the horizontal core portions 110 in a direction of an upper side of the horizontal core portions 110 to prevent the flux leakage into an outer side surface of the first vertical core portions 120. In particular, the horizontal core portions 110 and the first vertical core portions 120 may prevent a magnetic flux from leaking in a direction of side surfaces and a lower portion of the core structure 100, and concentrate the magnetic flux in a direction of an upper portion of the core structure 100, thereby maximizing a strength of a magnetic field.

The second vertical core portions 130 may be formed to extend from a central portion of the horizontal core portions 110 in a direction of the upper side of the horizontal core portions 110. In addition, the second vertical core portions 130 may be arranged to be parallel to the first vertical core portions 120. The second vertical core portions 130 may be provided in at least two columns, or in two columns for optimal efficiency. The second vertical core portions 130 may disperse a deflection load applied to both side surfaces of the second vertical core portions 130 to prevent a formation of cracks on a surface of an intermediate portion of a power supply road. In particular, by disposing the second vertical core portions 130 in a plurality of columns spaced at predetermined intervals, spaces between the columns of the second vertical core portions 130 may act as a buffer zone to prevent a formation of cracks on the surface of the intermediate portion of the power supply road. The plurality of second vertical core portions 130 may be bonded to the horizontal core portions 110 using an adhesive. In particular, the second vertical core portion 130 may be manufactured in a form of a separate unit having a shape of "⊏". The separate unit may be inserted and fit in the horizontal core portion 110 having an empty space in which the separate unit may be inserted such that an opened portion of the separate unit faces up, and bonded to the horizontal core portion 110 using the adhesive. Also, the horizontal core portion 110 and the second vertical core portion 130 may be manufactured integrally.

The columns constituting the second vertical core portions 130 may be disposed to be separated apart from each other. A space between the columns may range from 1 centimeter (cm) to 10 cm, however, for optimal efficiency, the space between the columns may be 4 cm. When the space between the columns is overly narrow or large, efficient dispersal of the deflection load applied to the both side surfaces of the second vertical core portions 130 may be impossible. However, depending on a condition of the road, the space between the columns constituting the second vertical core portions 130 may be adjusted is various forms.

In addition, by constructing the second vertical core portions 130 in the plurality of columns, an additional means of preventing a magnetic flux in the core structure 100 from leaking into an outer side surface of the core structure 100 may be provided. In particular, by enhancing a function to prevent the magnetic flux from leaking into the outer side surface of the core structure 100, the magnetic flux may be more concentrated in a direction of an upper portion of the core structure 100.

The horizontal core portions 110, the first vertical core portions 120, and the second vertical core portions 130 may include a ferrite material. Although not shown in the drawings, a power supply line may be installed between spaces formed by each column of the horizontal core portions 110, the first vertical core portions 120, and the second vertical core portions 130 to supply electric energy and form a magnetic field.

The first supporting portions 140 may connect the first vertical core portions 120 to each other to support the first vertical core portions 120. Here, the first supporting portions 140 may be formed along an inner side surface or an outer side surface of the end portions of the first vertical core portions 120, and may be disposed at an intermediate portion, or other portions, rather than the end portions of the first vertical core portions 120. In addition, the first supporting portions 140 may include a ferrite material, or may include various materials, for example, iron, an alloy, and the like. The first supporting portions 140 may be bonded to the first vertical core portions 120 using an adhesive.

The core structure 100 may further include second supporting portions 150 to connect the plurality of horizontal core portions 110 to each other to support the horizontal core portions 110. The description on the second supporting portions 150 may duplicate the description on the first supporting portions 140 and thus, the duplicated description will be omitted for conciseness.

### <Road structure>

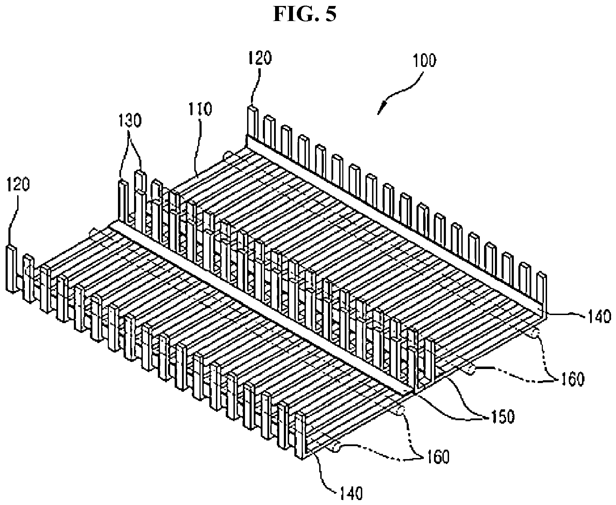

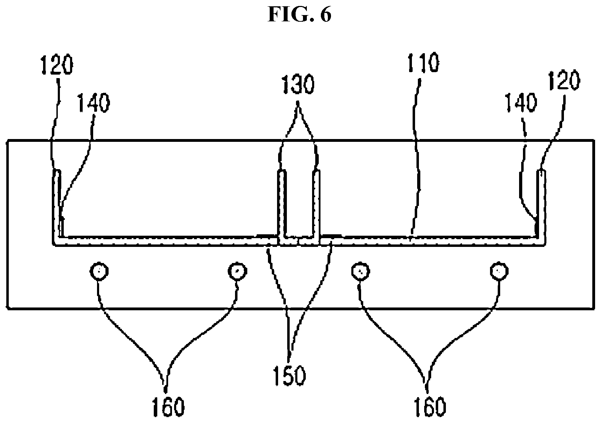

FIG. 5 is a perspective view illustrating steel bars and a ferrite core structure for a power supply device of an electric vehicle to be implanted in the ground according to an embodiment of the present invention, and FIG. 6 is a cross-sectional view illustrating a power supply road structure in which steel bars and a ferrite core structure are implanted according to an embodiment of the present invention. Referring to FIGS. 5 and 6, a power supply road structure (hereinafter, referred to as the "road structure") in which the core structure 100 and steel bars 160 are implanted may include the core structure 100 including the horizontal core portions 110, the first vertical core portions 120, the second vertical core portions 130, the first supporting portions 140, and the second supporting portions 150, and the steel bars 160 implanted under the core structure 100 to be spaced apart from the core structure 100. Although not shown in the drawings, as a modified example, the road structure may include the core structure 100 including the horizontal core portions 110, the first vertical core portions 120, the second vertical core portions 130, and the first supporting portions 140, and the steel bars 160. The description on the core structure 100 has been already provided above and thus, the steel bars 160 will be described hereinafter.

The steel bars 160 may be implanted in a longitudinal direction of the power supply road (a travelling direction of the vehicle). Here, a number of the steel bars 160 to be implanted may be greater than one. The number of the steel bars 160 to be implanted may be adjusted depending on a condition of the power supply road. In addition, when a diameter of the steel bars 160 is relatively small, the number of the steel bars 160 to be implanted may be increased. When the diameter of the steel bars 160 is relatively great, the number of the steel bars 160 to be implanted may be decreased. FIG. 6 illustrates an example in which four steel bars 160 are implanted.

In addition, the diameter of the steel bars 160 may be greater than or equal to 19 millimeters (mm). When the diameter of the steel bars 160 is less than 19 mm, effectively reducing strength degradation caused by a deflection in a traveling direction of the vehicle due to a load applied repeatedly to the road by passing vehicles may be impossible. In particular, when the diameter of the steel bars 160 is less than 19 mm, the steel bars 160 may not withstand the load applied to the road, and deflect in the travelling direction of the vehicle and thus, a formation of cracks on the road may not be prevented.

Hereinafter, a result of a test on an electromagnetic field (EMF) (milliGauss (mG)) and an output (kilowatt (kW)) measured using the core structure 100 according to an embodiment of the present invention will be described. Here, Table 1 shows results measured using a conventional ferrite core module, and Table 2 shows results measured using the core structure 100 including the second vertical core portions 130 disposed in columns arranged to be spaced 4 cm apart from each other according to the present embodiment.

### Test conditions

In the test, feed currents of 94 amperes (A) and 130 A were used. EMFs were measured at a position 1.2 meters (m) apart from a power collection center. An air space indicating a distance between a surface of a road and a power collection module of a vehicle was set to 25 cm. Under the foregoing conditions, outputs and EMFs were measured.

### Test results

As shown in Table 1 and Table 2, the core structure including the second vertical core portions of which the structure is changed shows results improved in terms of an output and an EMF, when compared to the conventional ferrite core module. In particular, when a feed current of 130 A was used, rather than 94 A, a magnitude of the EMF increased, when compared to the conventional ferrite core module.

**[Table 1]**

| Feed Current (A) | Resonant Frequency (kHz) | Voltage (V) | Current (A) | Output (kW) | EMF@1 (mG) | EMF@2 (mG) |
|---|---|---|---|---|---|---|
| 94 | 20 | 229 | 37.4 | 8.564 | 273 | 171 |
| - | 19.97 | 239 | 38.8 | 9.273 | 217 | 195 |
| - | 19.92 | 246 | 39.7 | 9.766 | 267 | 209 |
| 130 | 19.92 | 335 | 53.6 | 17.956 | 361 | 282 |
| - | 19.9 | 338 | 53.5 | 18.083 | 368 | 288 |

**[Table 2]**

| Feed Current (A) | Resonant Frequency (kHz) | Voltage (V) | Current (A) | Output (kW) | EMF@1 (mG) | EMF@2 (mG) |
|---|---|---|---|---|---|---|
| 94 | 20 | 234 | 38.2 | 8.938 | 280 | 326 |
| - | 19.95 | 247 | 40 | 9.88 | 297 | 345 |
| 130 | 19.95 | 333 | 53 | 17.649 | 401 | 465 |
| - | 19.91 | 341 | 53.8 | 18.345 | 409 | 473 |

Although a few embodiments of the present invention have been shown and described, the present invention is not limited to the described embodiments.

## Claims

1. A power supply road comprising ferrite core structure (100) for a power supply device of an electric vehicle, the ferrite core structure comprising:
a plurality of horizontal core portions (110) arranged to be spaced apart from each other to prevent a flux leakage into the ground;
a plurality of first vertical core portions (120) formed to extend from both end portions of the horizontal core portions (100) in a direction of an upper side of the horizontal core portions to prevent the flux leakage into an outer side surface; **characterized in that**
at least two columns of second vertical core portions (130) formed to extend from a central portion of the horizontal core portions (1 1 0) in a direction of the upper side of the horizontal core portions and arranged to be parallel to the first vertical core portions (120); and
a first supporting portion (140) to connect the plurality of first vertical core portions (120) to each other to support the first vertical core portions (120),
wherein the second vertical core portions (130) disperse a deflection load applied to both side surfaces of the second vertical core portions (130) to prevent a formation of cracks on a surface of an intermediate portion of a power supply road, and
the power supply road further comprising:
at least one steel bar (160) implanted under the ferrite core structure in a longitudinal direction of the power supply road which coincides with a traveling direction of a vehicle on said power supply road and spaced apart from the ferrite core structure.

2. The power supply road of claim 1, wherein the horizontal core portions (110), the first vertical core portions (120), and the second vertical core portions (130) include a ferrite material.

3. The power supply road of claim 1, wherein the at least two columns of the second vertical core portions (130) are disposed to be spaced apart from each other.

4. The power supply road of claim 1, further comprising:
a second supporting portion (150) to connect the plurality of horizontal core portions (11 0) to each other to support the horizontal core portions.

5. The power supply road of any of the preceding claims, wherein a diameter of the at least one steel bar is greater than or equal to 19 millimeters (mm).

## Patentansprüche

1. Stromliefernde Straße, die eine Ferritkernstruktur (100) umfasst, für eine Stromversorgungsvorrichtung eines Elektrofahrzeugs, wobei die Ferritkernstruktur Folgendes umfasst:
mehrere horizontale Kernabschnitte (110), die dazu angeordnet sind, voneinander beabstandet zu sein, um eine Kraftlinienstreuung in den Boden zu verhindern;
mehrere erste vertikale Kernabschnitte (120), die dazu ausgebildet sind, sich von beiden Endabschnitten der horizontalen Kernabschnitte (100) in Richtung einer Oberseite der horizontalen Kernabschnitte zu erstrecken, um die Kraftlinienstreuung in eine Außenseitenfläche zu verhindern; **dadurch gekennzeichnet, dass**
mindestens zwei Säulen von zweiten vertikalen Kernabschnitte (130), die dazu ausgebildet sind, sich von einem Mittelabschnitt der horizontalen Kernabschnitte (110) in Richtung der Oberseite der horizontalen Kernabschnitte zu erstrecken, und dazu angeordnet sind, parallel zu den ersten vertikalen Kernabschnitten (120) zu verlaufen; und
einen ersten Trägerabschnitt (140), um die mehreren ersten vertikalen Kernabschnitte (120) miteinander zu verbinden, um die ersten vertikalen Kernabschnitte (120) zu tragen, wobei die zweiten vertikalen Kernabschnitte (130) eine auf beide Seitenflächen der zweiten vertikalen Kernabschnitte (130) aufgebrachte Durchbiegungslast verteilen, um das Ausbilden von Rissen auf der Oberfläche eines Zwischenabschnitts einer stromliefernden Straße zu verhindern, und
wobei die stromliefernde Straße ferner Folgendes umfasst:
mindestens einen Stahlstab (160), der unter der Ferritkernstruktur in Längsrichtung der stromliefernden Straße, die der Fahrtrichtung eines Fahrzeugs auf der stromliefernden Straße entspricht, eingelassen und von der Ferritkernstruktur beabstandet ist.

2. Stromliefernde Straße nach Anspruch 1, wobei die horizontalen Kernabschnitte (110), die ersten vertikalen Kernabschnitte (120) und die zweiten vertikalen Kernabschnitte (130) ein Ferritmaterial umfassen.

3. Stromliefernde Straße nach Anspruch 1, wobei die mindestens zwei Säulen der zweiten vertikalen Kernabschnitte (130) dazu angeordnet sind, voneinander beabstandet zu sein.

4. Stromliefernde Straße nach Anspruch 1, ferner Folgendes umfassend:
einen zweiten Trägerabschnitt (150), um die mehreren horizontalen Kernabschnitte (110) miteinander zu verbinden, um die horizontalen Kernabschnitte zu tragen.

5. Stromliefernde Straße nach einem der vorstehenden Ansprüche, wobei der Durchmesser des mindestens einen Stahlstabs größer als oder gleich 19 Millimeter (mm) ist.

## Revendications

1. Route d'alimentation électrique comprenant une structure de noyau de ferrite (100) pour un dispositif d'alimentation électrique d'un véhicule électrique, la structure de noyau de ferrite comprenant :
une pluralité de parties horizontales de noyau (110) agencées pour être espacées les unes des autres pour empêcher une fuite de flux dans la terre ;
une pluralité de premières parties verticales de noyau (120) formées pour s'étendre depuis les deux parties d'extrémité des parties horizontales de noyau (100) dans une direction d'un côté supérieur des parties horizontales de noyau pour empêcher la fuite de flux dans une surface latérale extérieure ; **caractérisée en ce que**
au moins deux colonnes de deuxièmes parties verticales de noyau (130) formées pour s'étendre depuis une partie centrale des parties horizontales de noyau (110) dans une direction du côté supérieur des parties horizontales de noyau et agencées pour être parallèles aux premières parties verticales de noyau (120) ; et
une première partie de support (140) pour raccorder la pluralité de premières parties verticales de noyau (120) les unes aux autres pour supporter les premières parties verticales de noyau (120), les deuxièmes parties verticales de noyau (130) dispersant une charge d'écrasement appliquée aux deux surfaces latérales des deuxièmes parties verticales de noyau (130) pour empêcher une formation de fissures sur une surface d'une partie intermédiaire d'une route d'alimentation électrique, et
la route d'alimentation électrique comprenant en outre :
au moins une barre d'acier (160) implantée sous la structure de noyau de ferrite dans une direction longitudinale de la route d'alimentation électrique qui coïncide avec une direction de déplacement d'un véhicule sur ladite route d'alimentation électrique et espacée de la structure de noyau de ferrite.

2. Route d'alimentation électrique de la revendication 1, dans laquelle les parties horizontales de noyau (110), les premières parties verticales de noyau (120) et les deuxièmes parties verticales de noyau (130) comportent un matériau ferritique.

3. Route d'alimentation électrique de la revendication 1, dans laquelle les au moins deux colonnes des deuxièmes parties verticales de noyau (130) sont disposées pour être espacées l'une de l'autre.

4. Route d'alimentation électrique de la revendication 1, comprenant en outre :
une deuxième partie de support (150) pour raccorder la pluralité de parties horizontales de noyau (110) les unes aux autres pour supporter les parties horizontales de noyau.

5. Route d'alimentation électrique de l'une quelconque des revendications précédentes, dans laquelle un diamètre de l'au moins une barre d'acier est supérieur ou égal à 19 millimètres (mm).
